# EUROPÄISCHE PATENTANMELDUNG

(11) **EP 4 119 274 A1**
(43) Veröffentlichungstag der Anmeldung: **18.01.2023**
(21) Anmeldenummer: 21185397.3
(22) Anmeldetag: 13.07.2021
(51) Int. Cl.: B23K 9/073, B23K 9/09, B23K 9/095, B23K 9/10, B23K 9/12, B23K 9/173

(54) **KURZSCHLUSSSCHWEISSVERFAHREN UND SCHWEISSVORRICHTUNG**

(71) Anmelder: FRONIUS INTERNATIONAL GmbH, 4643 Pettenbach (AT)
(72) Erfinder: WALDHÖR, Andreas, 4643 Pettenbach (AT); SÖLLINGER, Dominik, 4643 Pettenbach (AT)
(74) Vertreter: SONN Patentanwälte OG

(57) **Zusammenfassung**

Schweißvorrichtung (1) und Kurzschlussschweißverfahren mit aufeinanderfolgenden Schweißzyklen, die jeweils eine Lichtbogenphase (6) und eine Kurzschlussphase (7) aufweisen, mit den folgenden Schritten:
Fördern eines Schweißdrahtes (3) weg von einem Werkstück (5), wobei der Schweißdraht (3) in einer ersten Rückwärtsförderphase (13) auf eine Rückwärtsendgeschwindigkeit (v_{re_max}) gebracht und mit der Rückwärtsendgeschwindigkeit (v_{re_max}) bis zu einer zweiten Rückwärtsförderphase (15), in der die Rückwärtsgeschwindigkeit (-v_{d}) des Schweißdrahts (3) wieder reduziert wird, gefördert wird,
Fördern des Schweißdrahtes (3) in Richtung des Werkstückes (5), wobei der Schweißdraht (3) in einer ersten Vorwärtsförderphase (16) auf eine Vorwärtsendgeschwindigkeit (v_{v_max}) gebracht und mit dieser bis zum Beginn einer zweiten Vorwärtsförderphase (18), in der die Vorwärtsgeschwindigkeit (v_{d}) des Schweißdrahts (3) wieder reduziert wird, gefördert wird, wobei die erste Zeitdauer (T₁) mittels einer Steuerung und/oder Regelung derart angepasst wird, dass der Schweißdraht (3) in der zweiten Rückwärtsförderphase (13) zum Zeitpunkt des Aufbrechens (12) des Kurzschlusses eine vorgegebene reduzierte Rückwärtsgeschwindigkeit (v_{re_K}) nicht überschreitet.

## Beschreibung

Die Erfindung betrifft ein Kurzschlussschweißverfahren mit aufeinanderfolgenden Schweißzyklen, die jeweils eine Lichtbogenphase und eine Kurzschlussphase aufweisen, mit den folgenden Schritten während eines Schweißzyklus:
Fördern eines abschmelzenden Schweißdrahtes weg von einem Werkstück während der Kurzschlussphase mit einer Rückwärtsgeschwindigkeit, sodass Material von dem Schweißdraht an das Werkstück abgegeben und ein Lichtbogen gezündet wird, wobei der Schweißdraht während der Kurzschlussphase in einer ersten Rückwärtsförderphase mit einer ersten Zeitdauer auf eine Rückwärtsendgeschwindigkeit gebracht und mit dieser bis zum Beginn einer zweiten Rückwärtsförderphase, in der die Rückwärtsgeschwindigkeit des Schweißdrahts wieder reduziert wird, gefördert wird; und
Fördern des Schweißdrahtes in Richtung des Werkstückes während der Lichtbogenphase mit einer Vorwärtsgeschwindigkeit, um den Schweißdraht mit dem Werkstück in Berührung zu bringen und einen Kurzschluss zwischen dem Schweißdraht und dem Werkstück zu erzeugen, wobei der Schweißdraht während der Lichtbogenphase in einer ersten Vorwärtsförderphase mit einer zweiten Zeitdauer auf eine Vorwärtsendgeschwindigkeit gebracht und mit dieser bis zum Beginn einer zweiten Vorwärtsförderphase, in der die Vorwärtsgeschwindigkeit des Schweißdrahts wieder reduziert wird, gefördert wird.

Des Weiteren betrifft die Erfindung eine Schweißvorrichtung zum Durchführen eines oben genannten Kurzschlussschweißverfahrens mit aufeinanderfolgenden Schweißzyklen, die jeweils eine Lichtbogenphase und eine Kurzschlussphase aufweisen, wobei die Schweißvorrichtung einen Schweißbrenner aufweist.

Unter Kurzschlussschweißverfahren der oben beschriebenen Art fallen insbesondere sogenannte CMT (Cold Metal Transfer)-Schweißverfahren. Bei einem CMT-Schweißverfahren wird zur Erzeugung einer Schweißnaht oder Beschichtung ein mit einem Schweißstrom beaufschlagter Schweißdraht aus schmelzbarem Material abwechselnd in Richtung des Werkstückes und wieder von diesem weg bewegt. In der Kurzschlussphase liegt zwischen dem Werkstück und dem Schweißdraht ein Kurzschluss vor, sodass die Materialabgabe vom Schweißdraht an das Werkstück unterstützt wird. Mit dem Aufbrechen des Kurzschlusses nach der Materialabgabe und dem (erneuten) Zünden des Lichtbogens wird die Kurzschlussphase beendet und die Lichtbogenphase eingeleitet. Während der Lichtbogenphase wird Wärmeenergie in den Schweißdraht und das Werkstück eingebracht.

Im Stand der Technik wird der abschmelzende Schweißdraht gemäß einem vorgegebenen Ablauf mit fest vorgegebenen Geschwindigkeiten und für fest vorgegebene Zeiten zum Werkstück (Lichtbogenphase) bzw. von diesem weg gefördert (Kurzschlussphase). Bekannt ist dies beispielsweise aus der EP 3 292 936 A1. In der Kurzschlussphase wird der Schweißdraht auf eine Rückwärtsendgeschwindigkeit gebracht, welche anschließend wieder reduziert wird, um den Schweißdraht mit einer Vorwärtsendgeschwindigkeit in Richtung des Werkstückes zu fördern. Die Zeiten, in denen der Schweißdraht in den jeweiligen Phasen mit den Endgeschwindigkeiten gefördert wird, werden vorab eingestellt. Ausgelöst werden die Zeiten vom Eintritt und dem Aufbrechen des Kurzschlusses.

Bei Kurzschlussschweißverfahren der eingangs beschriebenen Art kommt es häufig vor, dass die Eintritte und die Aufbrüche der Kurzschlüsse zeitlich von Schweißzyklus zu Schweißzyklus variieren, sodass die Schweißfrequenz nicht konstant ist. Dies führt zu einer Verminderung der Qualität der Schweißnaht. Bei vielen Werkstoffen, beispielsweise bei zähflüssigen Materialien, wie Chrom-Nickel-Legierungen oder Titan, kann es zudem passieren, dass bei der Materialabgabe auf das Werkstück unerwünschte Schweißspritzer entstehen, was die Schweißfrequenz und die Schweißqualität ebenfalls negativ beeinflusst. Schweißspritzer sind in der Regel darauf zurückzuführen, dass die Schweißdrahtgeschwindigkeit zum Zeitpunkt der Materialabgabe zu hoch ist. Ist die Schweißdrahtgeschwindigkeit andererseits zu niedrig, wird das die Schweißfrequenz bzw. die Tropfenabgabefrequenz und damit das Schweißverfahren unnötig verlangsamt und es kann zu weiteren Unregelmäßigkeiten in den Kurzschlusszeitpunkten kommen. Auch zum Zeitpunkt des Kurzschlusseintrittes soll die Schweißdrahtgeschwindigkeit nicht zu hoch gewählt werden, um weitere Unregelmäßigkeiten in der Schweißfrequenz und unerwünschte Effekte, wie zum Beispiel Berührungen des nicht aufgeschmolzen Grundmaterials durch den Schweißdraht, Schwingungen des Schweißbades und kurzzeitiges "Ankleben" des Schweißdrahtes, zu vermeiden. Wünschenswert wäre deshalb, den Geschwindigkeitsverlauf des Schweißdrahtes so zu wählen, dass eine möglichst hohe und vor allem möglichst stabile Schweißfrequenz gewährleistet wird und eine hohe Schweißqualität resultiert sowie Schweißspritzer vermieden werden.

Die idealen Geschwindigkeiten und Zeitdauern, mit denen der Schweißdraht mit der Vorwärts- und der Rückwärtsgeschwindigkeit in den jeweiligen Phasen zur Stabilisierung der Schweißfrequenz und zur Vermeidung von Schweißspritzern gefördert werden soll, hängen unter anderem von der Schweißnahtform, der Temperatur, Verunreinigungen, dem Material des Werkstückes und anderen Parametern ab und sind daher schwierig zu bestimmen. Es ist daher beim Stand der Technik nicht einfach, die ideal Zeitdauern bzw. Geschwindigkeitsverläufe für einen Schweißdraht bei einem Kurzschlussschweißverfahren zu wählen bzw. zu erreichen.

In Anbetracht dieser Ausführungen ist es daher Aufgabe der vorliegenden Erfindung, die Nachteile des Standes der Technik zu lindern oder gar gänzlich zu beseitigen. Vorzugsweise ist es Aufgabe der Erfindung, zur Verbesserung der Schweißqualität die Schweißfrequenz eines Kurzschlussschweißverfahren möglichst stabil zu halten.

Gelöst wird diese Aufgabe durch ein Kurzschlussschweißverfahren nach Anspruch 1, durch eine Schweißvorrichtung nach Anspruch 14, durch ein Kurzschlussschweißverfahren nach Anspruch 15 und durch eine Schweißvorrichtung nach Anspruch 16. Bevorzugte Ausführungsformen sind in den abhängigen Ansprüchen angegeben.

Nach Anspruch 1 ist daher bei einem Kurzschlussschweißverfahren der eingangs erwähnten Art zunächst vorgesehen, dass die erste Zeitdauer der ersten Rückwärtsförderphase mittels einer Steuerung und/oder Regelung derart angepasst wird, dass der Schweißdraht in der zweiten Rückwärtsförderphase zum Zeitpunkt des Aufbrechens des Kurzschlusses eine vorgegebene reduzierte Rückwärtsgeschwindigkeit nicht überschreitet. Vorzugsweise wird die erste Zeitdauer durch die Steuerung und/oder Regelung derart angepasst, dass der Schweißdraht in der zweiten Rückwärtsförderphase zum Zeitpunkt des Aufbrechens des Kurzschlusses im Wesentlichen die vorgegebene reduzierte Rückwärtsgeschwindigkeit aufweist. Vorteilhafterweise wird durch die Anpassung der ersten Zeitdauer die erste Rückwärtsförderphase und damit die Förderung des Schweißdrahtes mit der Rückwärtsendgeschwindigkeit rechtzeitig vor Aufbrechen des Kurzschlusses beendet und mit der Reduktion der Rückwärtsgeschwindigkeit des Schweißdrahtes begonnen, sodass bei der Materialabgabe an das Werkstück der Schweißdraht nicht zu schnell gefördert wird und somit Schweißspritzer vermieden werden. Die Steuerung und/oder Regelung sorgt also dafür, dass die Rückwärtsgeschwindigkeit des Schweißdrahtes reduziert wird, falls diese zu hoch ist. Mit anderen Worten sorgt die Steuerung und/oder Regelung dafür, dass der Schweißdraht in der zweiten Rückwärtsförderphase zum Zeitpunkt des Aufbrechens des Kurzschlusses auf einen geringeren Rückwärtsgeschwindigkeitswert eingestellt wird, welcher den vorgegebenen reduzierten Rückwärtsgeschwindigkeitswert nicht überschreitet. Dadurch wird die Schweißfrequenz stabilisiert. Der Absolutbetrag der vorgegebenen reduzierten Rückwärtsgeschwindigkeit ist dabei geringer als der Absolutbetrag der Rückwärtsendgeschwindigkeit. Die erste Zeitdauer der ersten Rückwärtsförderphase ist variabel einstellbar und wird von der Steuerung und/oder Regelung angepasst. Das Aufbrechen des Kurzschlusses, wie auch der Eintritt des Kurzschlusses, wird vorzugsweise durch Messen der Schweißspannung detektiert. Typische Werte für die erste Zeitdauer liegen beispielsweise zwischen 1 ms und 10 ms, vorzugsweise zwischen 2 und 3 ms bei Werten für die Schweißfrequenz zwischen 5 Hz und 200 Hz, vorzugsweise zwischen 80 Hz und 150 Hz. Die Anpassung der ersten Zeitdauer durch die Steuerung und/oder Regelung kann von Schweißzyklus zu Schweißzyklus oder, bei manchen Ausführungsformen der Erfindung, auch innerhalb eines Schweißzyklus erfolgen. Durch Anpassen der ersten Zeitdauer wird die erste Rückwärtsförderphase verkürzt oder verlängert. Wird beispielsweise festgestellt, dass der Schweißdraht zum Zeitpunkt des Aufbrechens des Kurzschlusses zu schnell gefördert wird, kann die erste Zeitdauer der ersten Rückwärtsförderphase entsprechend verkürzt werden. Wird beispielsweise festgestellt, dass der Schweißdraht zum Zeitpunkt des Aufbrechens des Kurzschlusses zu langsam gefördert wird, kann die erste Zeitdauer der ersten Rückwärtsförderphase entsprechend verlängert werden. Die erste Rückwärtsförderphase beginnt zu dem Zeitpunkt, zu dem der Schweißdraht von einer Vorwärtsgeschwindigkeit auf eine Rückwärtsgeschwindigkeit wechselt. In der ersten Rückwärtsförderphase wird der Schweißdraht durch Beschleunigung auf die Rückwärtsendgeschwindigkeit gebracht. Wenn die Rückwärtsendgeschwindigkeit erreicht ist, kann die Beschleunigung des Schweißdrahtes beendet und die Geschwindigkeit des Schweißdrahtes im Wesentlichen konstant gehalten werden. Vorzugsweise erfolgt in der ersten Rückwärtsförderphase eine im Wesentlichen konstante Beschleunigung. An die erste Rückwärtsförderphase schließt unmittelbar die zweite Rückwärtsförderphase an, in welcher die Rückwärtsgeschwindigkeit durch Beschleunigung ("Abbremsen") des Schweißdrahtes (nun in die entgegengesetzte Richtung) wieder reduziert wird. Unter Reduktion der Rückwärtsgeschwindigkeit wird eine Verringerung des Absolutbetrags und damit eine Verlangsamung der Rückwärtsbewegung des Schweißdrahtes verstanden. Das Aufbrechen des Kurzschlusses findet vorzugsweise in der zweiten Rückwärtsförderphase statt, wobei die Steuerung und/oder Regelung dafür sorgt, dass der Schweißdraht zum Zeitpunkt des Aufbrechens des Kurzschlusses die vorgegebene reduzierte Rückwärtsgeschwindigkeit nicht überschreitet. Bevorzugt ist, wenn die Steuerung und/oder Regelung dafür sorgt, dass der Schweißdraht zum Zeitpunkt des Aufbrechens des Kurzschlusses der vorgegebenen reduzierten Rückwärtsgeschwindigkeit entspricht. Bei Aufbrechen des Kurzschlusses kann die Beschleunigung des Schweißdrahtes für eine Haltezeitdauer gestoppt werden. Anschließend kann die Beschleunigung in der zweiten Rückwärtsförderphase fortgesetzt werden. An die zweite Rückwärtsförderphase kann die erste Vorwärtsförderphase anschließen, in der der Schweißdraht auf eine Vorwärtsendgeschwindigkeit gebracht wird. An die erste Vorwärtsförderphase schließt die zweite Vorwärtsförderphase, in welcher die Vorwärtsgeschwindigkeit durch Beschleunigung des Schweißdrahtes wieder reduziert wird. An die zweite Vorwärtsförderphase schließt erneut die erste Rückwärtsförderphase an. Ein Schweißzyklus besteht demnach aus der ersten und der zweiten Rückwärtsförderphase sowie aus der ersten und der zweiten Vorwärtsförderphase in dieser Reihenfolge. Der Betrag der Rückwärtsendgeschwindigkeit und/oder der Betrag der Vorwärtsendgeschwindigkeit können beispielsweise zwischen 10 m/min und 70 m/min, insbesondere zwischen 20 m/min und 60 m/min, betragen. Vorwärtsgeschwindigkeiten weisen in dieser Offenbarung ein positives bzw. kein Vorzeichen auf. Rückwärtsgeschwindigkeiten werden zur Unterscheidung mit einem negativen Vorzeichen versehen. Die Vorwärtsgeschwindigkeiten und die Rückwärtsgeschwindigkeiten werden so gewählt, dass sich über mehrere Schweißzyklen hinweg im Mittel eine Vorwärtsgeschwindigkeit in Richtung des Werkstückes ergibt. Mit anderen Worten ist das Integral über den Geschwindigkeitsverlauf über mehrere Schweißzyklen hinweg positiv. Dies ist deshalb erforderlich, weil der abschmelzende Schweißdraht Material an das Werkstück zur Bildung einer Schweißnaht oder einer Beschichtung abgibt. Typische Beträge für Beschleunigungswerte des Schweißdrahtes liegen zum Beispiel im Bereich zwischen 30 000 m/min/s und 60 000 m/min/s. Die Förderung des Schweißdrahtes erfolgt vorzugsweise durch einen Elektromotor, insbesondere einen getriebelosen Direktantrieb.

In einer bevorzugten Ausführungsform ist vorgesehen, dass die zweite Rückwärtsförderphase eine erste Zwischenplateauphase mit einer im Wesentlichen konstanten Rückwärtsgeschwindigkeit aufweist, wobei der Schweißdraht in der ersten Zwischenplateauphase vorzugsweise mit der vorgegebenen reduzierten Rückwärtsgeschwindigkeit von dem Werkstück weg gefördert wird. Durch die Zwischenplateauphase wird die Beschleunigung, mit der die Rückwärtsgeschwindigkeit des Schweißdrahtes reduziert wird, unterbrochen. Vorteil der ersten Zwischenplateauphase ist, dass der Schweißdraht während dieser Zeit mit einer im Vergleich zur Rückwärtsendgeschwindigkeit reduzierten und im Wesentlichen konstanten Rückwärtsgeschwindigkeit gefördert wird und die Materialübergabe auf das Werkstück ohne Beschleunigung erfolgen kann, so dass keine Schweißspritzer verursacht werden. Die Rückwärtsgeschwindigkeit ist während der gesamten ersten Zwischenplateauphase im Wesentlichen konstant.

Bevorzugt ist daher, wenn die erste Zeitdauer derart durch die Steuerung und/oder Regelung angepasst wird, dass das Aufbrechen des Kurzschlusses in der ersten Zwischenplateauphase erfolgt. Nach dem Aufbrechen des Kurzschlusses kann die Beschleunigung des Schweißdrahtes noch für eine bestimmte Haltezeitdauer ausgesetzt werden, bevor die Beschleunigung des Schweißdrahtes in der zweiten Rückwärtsförderphase fortgesetzt wird. Nach der Haltezeitdauer kann der Schweißdraht weiterbeschleunigt werden, bis der Schweißdraht schlussendlich mit einer Vorwärts(end)geschwindigkeit gefördert wird.

Bei einer Ausführungsform der Erfindung ist eine Regelung zum Anpassen der ersten Zeitdauer vorgesehen, wobei die Regelung durch einen Regelkreis mit einem Regler, insbesondere einem P-oder PI-Regler, erfolgt, wobei die Regelung die erste Zeitdauer anpasst, sodass die erste Zwischenplateauphase einer ersten Solldauer entspricht. Bevorzugt ist, wenn eine Stellgröße des Regelkreises durch die erste Zeitdauer und eine Führungsgröße des Regelkreises durch die erste Solldauer der ersten Zwischenplateauphase gebildet wird. Als gemessene Regelgröße kann die Zeitdauer der ersten Zwischenplateauphase dienen. Der Regler passt die erste Zeitdauer derart an, dass das Aufbrechen des Kurzschlusses in der ersten Zwischenplateauphase stattfindet. Die erste Solldauer gibt vor, wie lange die erste Zwischenplateauphase andauern soll. Die erste Solldauer kann beispielsweise zwischen 0,5ms und 1,5 ms betragen. Eine Führungsgröße kann auch als Sollgröße für den Regelkreis bezeichnet werden. Der Regler passt die erste Zeitdauer von Schweißzyklus zu Schweißzyklus an. Ist eine Abweichung zwischen der ersten Solldauer und der tatsächlichen Dauer der ersten Zwischenplateauphase gegeben, wird die erste Zeitdauer der ersten Rückwärtsförderphase im nächsten Schweißzyklus angepasst. Wenn die Ist-Dauer der ersten Zwischenplateauphase ist, wird die erste Zeitdauer der ersten Rückwärtsförderphase verkürzt. Wenn die Ist-Dauer der ersten Zwischenplateauphase zu lang ist, wird die erste Zeitdauer der ersten Rückwärtsförderphase verlängert. Um allfällige Schwingungen zu vermeiden, kann die Regelung vorzugsweise parametrierbare Filter aufweisen. Ein Filter kann beispielsweise die maximale Änderungsrate bzw. die Flankensteilheit (Slew Rate) festlegen. Ein Filter kann zum Beispiel durch ein PT1-Glied gebildet sein.

Bei einer alternativen Ausführungsform ist eine Regelung zum Anpassen der ersten Zeitdauer vorgesehen, wobei die Regelung durch einen Regelkreis mit einem Regler, insbesondere einem P- oder PI-Regler, erfolgt, wobei eine Stellgröße des Regelkreises durch die erste Zeitdauer, eine Führungsgröße des Regelkreises durch eine Soll-Rückwärtsgeschwindigkeit des Schweißdrahtes, insbesondere die vorgegebene reduzierte Rückwärtsgeschwindigkeit, und eine gemessene Regelgröße des Regelkreises durch eine gemessene Rückwärtsgeschwindigkeit des Schweißdrahtes zum Zeitpunkt des Aufbrechens des Kurzschlusses gebildet wird. Bei einer Abweichung der gemessenen Rückwärtsgeschwindigkeit des Schweißdrahtes von der Soll-Rückwärtsgeschwindigkeit zum Zeitpunkt des Aufbrechens des Kurzschlusses wird die erste Zeitdauer im nächsten Schweißzyklus angepasst. Wenn also der Schweißdraht zum Zeitpunkt des Aufbrechens des Kurzschlusses eine zu hohe oder eine zu niedrige Rückwärtsgeschwindigkeit aufweist, wird die erste Zeitdauer der ersten Rückwärtsförderphase im nächsten Schweißzyklus verkürzt bzw. verlängert. Die Geschwindigkeit des Schweißdrahtes zum Zeitpunkt des Aufbrechens des Kurzschlusses kann gemessen werden.

In Bezug auf die Regelung kann es vorteilhaft sein, einen Offsetwert auf die Führungsgröße aufzuaddieren.

Bei einer weiteren alternativen Ausführungsform wird laufend ein Widerstandswert aus einem Schweißstrom und einer Schweißspannung ermittelt und eine Prognose über den Zeitpunkt des Aufbrechens des Kurzschlusses aus dem Widerstandswert erstellt, wobei die erste Zeitdauer auf Basis der Prognose angepasst wird, indem mit der zweiten Rückwärtsförderphase begonnen wird. Der laufend ermittelte Widerstandswert lässt Rückschlüsse auf das bevorstehende Aufbrechen des Kurzschlusses zu. Wenn das Aufbrechen des Kurzschlusses nahe bevorsteht, wird die erste Rückwärtsförderphase beendet und die Rückwärtsfördergeschwindigkeit des Schweißdrahtes reduziert, sodass der Schweißdraht zum Zeitpunkt des Aufbrechens des Kurzschlusses die vorgegebene reduzierte Rückwärtsgeschwindigkeit nicht überschreitet oder dieser im Wesentlichen entspricht. Bevorzugt ist vorgesehen, dass die erste Rückwärtsförderphase derart rechtzeitig beendet wird, dass das Aufbrechen des Kurzschlusses in der ersten Zwischenplateauphase stattfindet. Die Anpassung der ersten Zeitdauer findet bei dieser Ausführungsform demnach innerhalb eines Schweißzyklus statt.

Um den Zeitpunkt des das Aufbrechen des Kurzschlusses bestimmen zu können, kann vorgesehen sein, dass die Prognose auf Basis eines vorgegebenen Widerstandsschwellwertes oder auf Basis einer Widerstandsänderungsrate erstellt wird. Beispielsweise kann die erste Rückwärtsförderphase beendet werden, wenn der laufend ermittelte Widerstandswert den vorgegebenen Widerstandsschwellwert überschreitet oder die Widerstandsänderungsrate einen vorgegebenen Widerstandsänderungsratenschwellwert überschreitet.

Eine besonders effiziente Ausgestaltung der Erfindung ergibt sich, wenn die erste Rückwärtsförderphase eine erste Endplateauphase aufweist, in welcher der Schweißdraht mit im Wesentlichen konstanter Rückwärtsendgeschwindigkeit gefördert wird und eine Zeitdauer der ersten Endplateauphase durch die Steuerung und/oder Regelung angepasst wird. Die Anpassung der ersten Zeitdauer der Rückwärtsförderphase erfolgt über die Anpassung der Zeitdauer der ersten Endplateauphase.

Die bisherigen Ausführungen betreffen die Kurzschlussphase des Kurzschlussschweißverfahrens. Um die Effizienz und Stabilität des Schweißverfahrens, insbesondere der Schweißfrequenz, zu erhöhen, können die bisher beschriebenen Verfahrensschritte analog auf die Lichtbogenphase und den Eintritt des Kurzschlusses angewendet werden. In einer Ausführungsform ist daher vorgesehen, dass die zweite Zeitdauer der ersten Vorwärtsförderphase mittels einer weiteren Steuerung und/oder Regelung derart angepasst wird, dass der Schweißdraht in der zweiten Vorwärtsförderphase zum Zeitpunkt des Eintritts des Kurzschlusses eine vorgegebene reduzierte Vorwärtsgeschwindigkeit nicht überschreitet. Durch Anpassen der zweiten Zeitdauer wird die erste Vorwärtsförderphase verkürzt oder verlängert, sodass der Schweißdraht in der zweiten Vorwärtsförderphase zum Zeitpunkt des Aufbrechens des Kurzschlusses die vorgegebene reduzierte Vorwärtsgeschwindigkeit nicht überschreitet oder dieser im Wesentlichen entspricht. Die zweite Vorwärtsförderphase schließt unmittelbar an die erste Vorwärtsförderphase an. Die vorgegebene reduzierte Vorwärtsgeschwindigkeit ist im Vergleich zur Vorwärtsendgeschwindigkeit kleiner. Vorzugsweise weist die zweite Vorwärtsförderphase eine zweite Zwischenplateauphase mit einer im Wesentlichen konstanten Vorwärtsgeschwindigkeit auf, wobei der Schweißdraht in der zweiten Zwischenplateauphase vorzugsweise mit der vorgegebenen reduzierten Vorwärtsgeschwindigkeit gefördert wird. Weiters ist bevorzugt vorgesehen, dass die zweite Zeitdauer derart durch die weitere Steuerung und/oder Regelung angepasst wird, dass der Eintritt des Kurzschlusses in der ersten Zwischenplateauphase erfolgt.

Die oben in Zusammenhang mit der Kurzschlussphase beschriebenen Ausführungsformen der Regelung und/oder Steuerung sind auf die Lichtbogenphase analog anwendbar.

Bei einer Ausführungsform der Erfindung ist daher eine weitere Regelung zum Anpassen der zweiten Zeitdauer vorgesehen, wobei die weitere Regelung durch einen weiteren Regelkreis mit einem weiteren Regler, insbesondere einem P- oder PI-Regler, erfolgt, wobei die weitere Regelung die zweite Zeitdauer anpasst, sodass die zweite Zwischenplateauphase eine zweite Solldauer aufweist. Bevorzugt ist, wenn eine Stellgröße des weiteren Regelkreises durch die zweite Zeitdauer und eine Führungsgröße des weiteren Regelkreises durch die zweite Solldauer der zweiten Zwischenplateauphase gebildet wird. Der weitere Regler passt die zweite Zeitdauer derart an, dass der Eintritt des Kurzschlusses in der zweiten Zwischenplateauphase stattfindet. Die zweite Solldauer gibt vor, wie lange die zweite Zwischenplateauphase andauern soll. Die zweite Solldauer der zweiten Zwischenplateauphase kann beispielsweise zwischen 0,5 ms und 2 ms betragen. Eine Führungsgröße kann auch als Sollgröße für den Regelkreis bezeichnet werden. Der weitere Regler passt die zweite Zeitdauer von Schweißzyklus zu Schweißzyklus an. Ist eine Abweichung zwischen der zweiten Solldauer und der tatsächlichen Dauer der zweiten Zwischenplateauphase gegeben, wird die zweite Zeitdauer der zweiten Vorwärtsförderphase im nächsten Schweißzyklus angepasst. Bei dieser Ausführungsform wird also die zweite Solldauer vorgegeben und die zweite Zeitdauer derart angepasst, dass die zweite Zwischenplateauphase die zweite Solldauer aufweist. Wenn beispielsweise die Ist-Dauer der zweiten Zwischenplateauphase zu kurz ist, wird die zweite Zeitdauer der ersten Vorwärtsförderphase verkürzt. Wenn beispielsweise die Ist-Dauer der zweiten Zwischenplateauphase zu lang ist, wird die zweite Zeitdauer der zweiten Vorwärtsförderphase verlängert.

Bei einer alternativen Ausführungsform ist eine weitere Regelung zum Anpassen der zweiten Zeitdauer vorgesehen, wobei die weitere Regelung durch einen weiteren Regelkreis mit einem weiteren Regler, insbesondere einem P- oder PI-Regler, erfolgt, wobei eine Stellgröße des weiteren Regelkreises durch die zweite Zeitdauer, eine Führungsgröße des weiteren Regelkreises durch eine Soll-Vorwärtsgeschwindigkeit des Schweißdrahtes, insbesondere die vorgegebene reduzierte Vorwärtsgeschwindigkeit, und eine gemessene Regelgröße des weiteren Regelkreises durch die Vorwärtsgeschwindigkeit des Schweißdrahtes zum Zeitpunkt des Eintritts des Kurzschlusses gebildet wird. Bei einer Abweichung der Vorwärtsgeschwindigkeit des Schweißdrahtes von der Soll-Vorwärtsgeschwindigkeit wird die zweite Zeitdauer im nächsten Schweißzyklus angepasst. Wenn also der Schweißdraht zum Zeitpunkt des Eintritts des Kurzschlusses eine zu hohe oder eine zu niedrige Vorwärtsgeschwindigkeit aufweist, wird die zweite Zeitdauer der zweiten Vorwärtsförderphase im nächsten Schweißzyklus verkürzt bzw. verlängert. Die Geschwindigkeit des Schweißdrahtes zum Zeitpunkt des Eintritts des Kurzschlusses kann gemessen werden.

In Bezug auf die Regelung kann es vorteilhaft sein, einen Offsetwert auf die Führungsgröße aufzuaddieren.

Eine besonders effiziente Ausgestaltung der Erfindung ergibt sich, wenn die erste Vorwärtsförderphase eine zweite Endplateauphase aufweist, in der der Schweißdraht mit im Wesentlichen konstanter Vorwärtsendgeschwindigkeit gefördert wird und eine Zeitdauer der zweiten Endplateauphase durch die weitere Steuerung und/oder Regelung angepasst wird. Die Anpassung der zweiten Zeitdauer der Vorwärtsförderphase erfolgt über die Anpassung der Zeitdauer der zweiten Endplateauphase.

Die eingangs erwähnte Aufgabe wird auch durch eine Schweißvorrichtung nach Anspruch 14 gelöst. Die Schweißvorrichtung ist zum Durchführen eines Kurzschlussschweißverfahrens konfiguriert und weist einen Schweißbrenner auf. Die Schweißvorrichtung ist dazu eingerichtet,
einen abschmelzenden Schweißdraht weg von einem Werkstück während der Kurzschlussphase mit einer Rückwärtsgeschwindigkeit zu fördern, sodass Material von dem Schweißdraht an das Werkstück abgegeben und ein Lichtbogen gezündet wird, wobei die Schweißvorrichtung weiters dazu eingerichtet ist, den Schweißdraht während der Kurzschlussphase in einer ersten Rückwärtsförderphase mit einer ersten Zeitdauer auf eine Rückwärtsendgeschwindigkeit zu bringen und mit der Rückwärtsendgeschwindigkeit bis zum Eintritt einer zweiten Rückwärtsförderphase, in der die Rückwärtsgeschwindigkeit des Schweißdrahts wieder reduziert wird, zu fördern,
und die Schweißvorrichtung weiters dazu eingerichtet ist, den Schweißdraht in Richtung des Werkstückes während der Lichtbogenphase mit einer Vorwärtsgeschwindigkeit zu fördern, um einen Kurzschluss zwischen dem Schweißdraht und dem Werkstück zu erzeugen, wobei die Schweißvorrichtung weiters dazu eingerichtet ist, den Schweißdraht während der Lichtbogenphase in einer ersten Vorwärtsförderphase mit einer zweiten Zeitdauer auf eine Vorwärtsendgeschwindigkeit zu bringen und mit der Vorwärtsendgeschwindigkeit bis zum Eintritt einer zweiten Vorwärtsförderphase, in der die Vorwärtsgeschwindigkeit des Schweißdrahts wieder reduziert wird, zu fördern
wobei eine Steuer-/Regelungseinheit vorgesehen ist, die dazu eingerichtet ist, die erste Zeitdauer der ersten Rückwärtsförderphase mittels einer Steuerung und/oder Regelung derart anzupassen, dass der Schweißdraht in der zweiten Rückwärtsförderphase zum Zeitpunkt des Aufbrechens des Kurzschlusses eine vorgegebene reduzierte Rückwärtsgeschwindigkeit nicht überschreitet.

Hinsichtlich der Vorteile und weiterer Merkmale der Vorrichtung wird auf das oben beschriebene Kurzschlussschweißverfahren verwiesen. Die in Zusammenhang mit dem Kurzschlussschweißverfahren beschriebenen Merkmale können auch auf die Schweißvorrichtung übertragen werden. Die die Schweißvorrichtung kann eine Drahtvorschubeinheit aufweisen, die dazu eingerichtet ist, den Schweißdraht zu fördern. Die Schweißvorrichtung kann einen Elektromotor, insbesondere einen getriebelosen Direktantrieb, aufweisen.

Die eingangs erwähnte Aufgabe wird auch durch ein Kurzschlussverfahren nach Anspruch 15 gelöst. Nach Anspruch 15 ist bei einem Kurzschlussschweißverfahren der eingangs erwähnten Art vorgesehen, dass die zweite Zeitdauer der ersten Vorwärtsförderphase mittels einer weiteren Steuerung und/oder Regelung derart angepasst wird, dass der Schweißdraht in der zweiten Vorwärtsförderphase zum Zeitpunkt des Eintritts des Kurzschlusses eine vorgegebene reduzierte Vorwärtsgeschwindigkeit nicht überschreitet.

Die Steuerung und/oder Regelung sorgt also dafür, dass die Vorwärtsgeschwindigkeit des Schweißdrahtes reduziert wird, falls diese zu hoch ist. Mit anderen Worten sorgt die Steuerung und/oder Regelung dafür, dass der Schweißdraht in der zweiten Vorwärtsförderphase zum Zeitpunkt des Eintretens des Kurzschlusses auf einen geringeren Vorwärtsgeschwindigkeitswert eingestellt wird, welcher den vorgegebenen reduzierten Vorwärtsgeschwindigkeitswert nicht überschreitet.

Die weitere Steuerung und/oder Regelung wurde bereits in Zusammenhang mit dem Kurzschlussverfahren nach Anspruch 1 beschrieben. Die obigen Merkmale und Erläuterungen gelten auch für das Kurzschlussverfahren nach Anspruch 15.

Die eingangs erwähnte Aufgabe wird auch durch eine Schweißvorrichtung nach Anspruch 16 gelöst. Die Schweißvorrichtung ist zum Durchführen eines Kurzschlussschweißverfahrens konfiguriert und weist einen Schweißbrenner auf, wobei die Schweißvorrichtung dazu eingerichtet ist
den Schweißdraht weg von dem Werkstück während der Kurzschlussphase mit einer Rückwärtsgeschwindigkeit zu fördern, sodass Material von dem Schweißdraht an das Werkstück abgegeben und ein Lichtbogen gezündet wird, wobei die Schweißvorrichtung weiters dazu eingerichtet ist, den Schweißdraht während der Kurzschlussphase in einer ersten Rückwärtsförderphase mit einer ersten Zeitdauer auf eine Rückwärtsendgeschwindigkeit zu bringen und mit der Rückwärtsendgeschwindigkeit bis zum Eintritt einer zweiten Rückwärtsförderphase, in der die Rückwärtsgeschwindigkeit des Schweißdrahts wieder reduziert wird, zu fördern,
und die Schweißvorrichtung weiters dazu eingerichtet ist einen abschmelzenden Schweißdraht in Richtung eines Werkstückes während der Lichtbogenphase mit einer Vorwärtsgeschwindigkeit zu fördern, um einen Kurzschluss zwischen dem Schweißdraht und dem Werkstück zu erzeugen, wobei die Schweißvorrichtung weiters dazu eingerichtet ist, den Schweißdraht während der Lichtbogenphase in einer ersten Vorwärtsförderphase mit einer zweiten Zeitdauer auf eine Vorwärtsendgeschwindigkeit zu bringen und mit der Vorwärtsendgeschwindigkeit bis zum Eintritt einer zweiten Vorwärtsförderphase, in der die Vorwärtsgeschwindigkeit des Schweißdrahts wieder reduziert wird, zu fördern,
wobei eine weitere Steuer- und/oder Regelungseinheit vorgesehen ist, die dazu eingerichtet ist, die zweite Zeitdauer der ersten Vorwärtsförderphase mittels einer weiteren Steuerung und/oder Regelung derart anzupassen, dass der Schweißdraht in der zweiten Vorwärtsförderphase zum Zeitpunkt des Eintritts des Kurzschlusses eine vorgegebene reduzierte Vorwärtsgeschwindigkeit nicht überschreitet.

Im Folgenden wird die Erfindung an Hand von Figuren näher erläutert, auf die sie allerdings nicht beschränkt sein soll. Es zeigen:
Fig. 1 eine Schweißvorrichtung zur Durchführung eines Kurzschlussschweißverfahrens;
Fig. 2 einen Schweißspannungsverlauf, einen Schweißstromverlauf und einen Geschwindigkeitsverlauf eines Schweißdrahtes bei einem Kurzschlussschweißverfahren aus dem Stand der Technik;
Fig. 3 einen Schweißspannungsverlauf, einen Schweißstromverlauf und einen Geschwindigkeitsverlauf eines Schweißdrahtes bei einem Kurzschlussschweißverfahren gemäß der Erfindung;
Fig. 4A und Fig. 4B einen Regelkreis;
Fig. 5 einen Schweißspannungsverlauf, einen Schweißstromverlauf und einen weiteren Geschwindigkeitsverlauf eines Schweißdrahtes bei einem Kurzschlussschweißverfahren gemäß der Erfindung;
Fig. 6A und Fig. 6B einen weiteren Regelkreis; und
Fig. 7 einen Schweißspannungsverlauf, einen Schweißstromverlauf, einen geschwindigkeitsverlauf eines Schweißdrahtes und einen zeitlichen Verlauf eines Widerstandswerts.

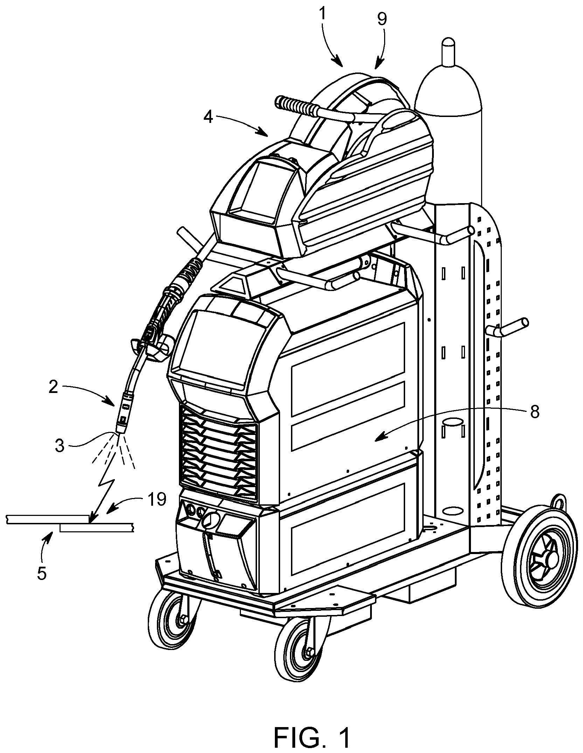

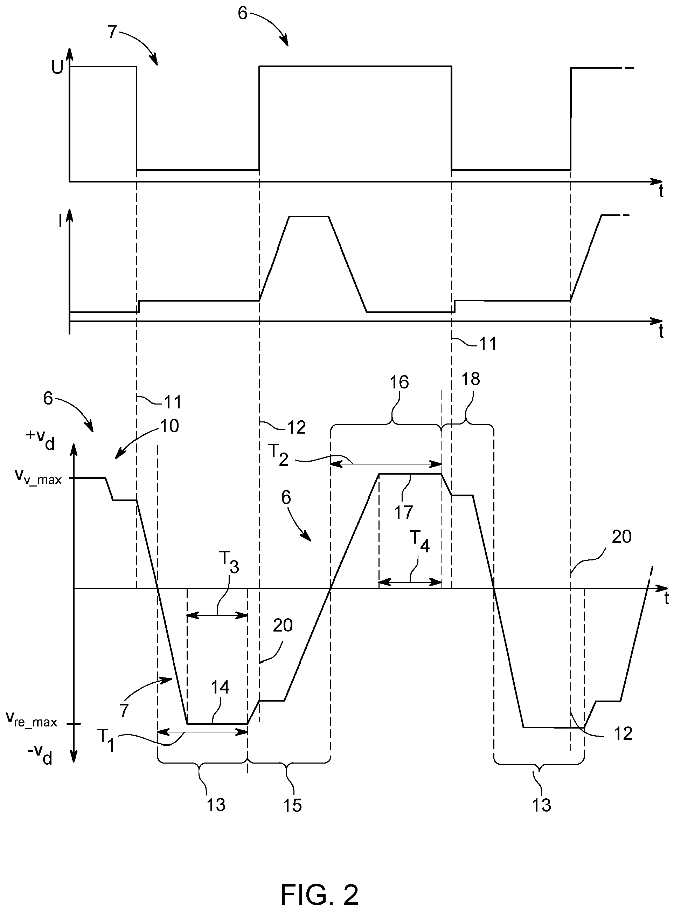

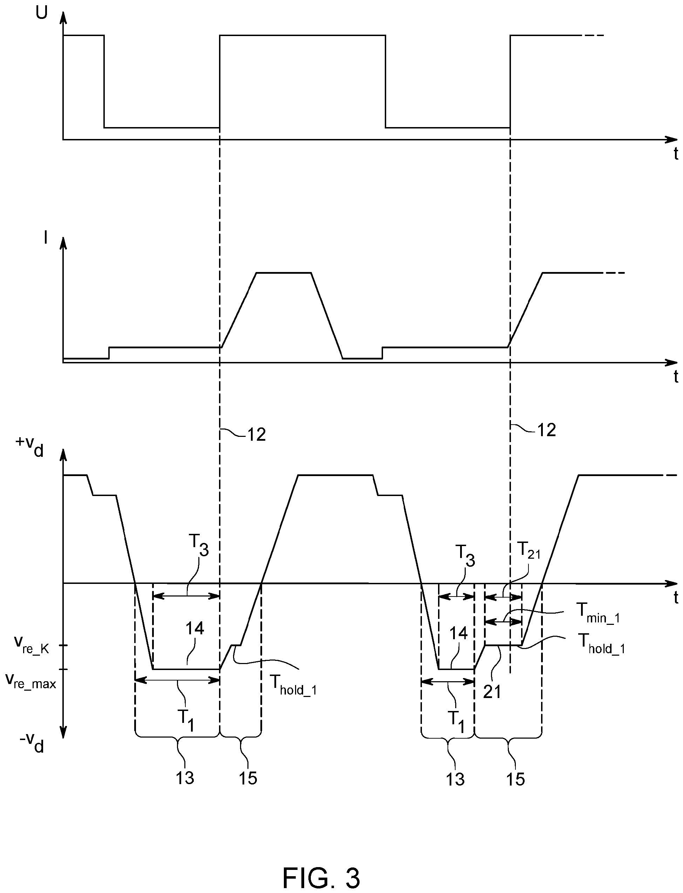

Fig. 1 zeigt eine Schweißvorrichtung 1 mit einem Schweißbrenner 2, die dazu eingerichtet ist, ein Kurzschlussschweißverfahren, insbesondere ein CMT-Schweißverfahren, auszuführen. Bei einem Kurzschlussschweißverfahren wird ein abschmelzender Schweißdraht 3 (Elektrode) durch eine Fördereinrichtung 4, welche einen Elektromotor aufweisen kann, abwechselnd in Richtung eines Werkstückes 5 und zurück bewegt. Durch diesen Ablauf kann ein Kurzschlussschweißverfahren in Lichtbogenphasen 6 und Kurzschlussphasen 7 unterteilt werden (vgl. zum Beispiel Fig. 2 und 3). Die Schweißvorrichtung 1 besitzt zur Steuerung und/oder Regelung des Schweißdrahtes 3 eine Steuer-/Regelungseinheit 8. Der Schweißdraht 3 wird von einer Vorratstrommel 9 in den Bereich des Schweißbrenners 2 geführt.

Fig. 2 zeigt (unterhalb eines Zeitverlaufs einer Schweißspannung U und eines Zeitverlaufs eines Schweißstromes I) einen Geschwindigkeitsverlauf 10 eines Schweißdrahtes 3 bei einem Kurzschlussschweißverfahren aus dem Stand der Technik mit fest vorgegebenen und vorab eingestellten Zeitabläufen. Auf der Ordinate ist die Geschwindigkeit v_{d} aufgetragen, wobei +v_{d} eine Vorwärtsgeschwindigkeit des Schweißdrahtes 3 in Richtung des Werkstückes 5 und - v_{d} eine Rückwärtsgeschwindigkeit des Schweißdrahtes 3 weg vom Werkstück 5 bezeichnet. Das Kurzschlussschweißverfahren kann in Lichtbogenphasen 6 und in Kurzschlussphasen 7 eingeteilt werden. Eine Kurzschlussphase 7 beginnt mit Eintritt 11 des Kurzschlusses zwischen dem Schweißdraht 3 und dem Werkstück 5, wenn der Schweißdraht 3 das Werkstück 5 berührt. Eine Lichtbogenphase 6 beginnt mit dem Aufbrechen 12 des Kurzschlusses zwischen dem Schweißdraht 3 und dem Werkstück 5 und endet wieder mit dessen Eintritt. Während der Lichtbogenphase 6 wird der Schweißdraht 3 hauptsächlich in Richtung des Werkstückes 5 mit einer Vorwärtsgeschwindigkeit +v_{d} gefördert. Während der Kurzschlussphase 7 wird der Schweißdraht 3 hauptsächlich vom Werkstückes 5 weg mit einer Rückwärtsgeschwindigkeit -v_{d} gefördert. Ein Schweißzyklus setzt sich aus einer Lichtbogenphase 6 und einer Kurzschlussphase 7 zusammen.

Der Geschwindigkeitsverlauf 10 des Schweißdrahtes 3 kann weiter in einzelne Schweißdrahtgeschwindigkeitsphasen unterteilt werden, mit denen der Schweißdraht 3 gefördert wird. In einer ersten Rückwärtsförderphase 13 wird der Schweißdraht 3 durch Beschleunigung auf eine Rückwärtsendgeschwindigkeit v_{re_max} gebracht. Die Rückwärtsendgeschwindigkeit v_{re_max} kann beispielsweise im Bereich zwischen 10 m/min und 60 m/min, insbesondere zwischen 20 m/min und 60 m/min, liegen. Die erste Rückwärtsförderphase 13 weist eine Gesamtdauer auf, die als erste Zeitdauer T₁ bezeichnet wird und die beispielsweise 3 ms betragen kann. Nachdem der Schweißdraht 3 die Rückwärtsendgeschwindigkeit v_{re_max} erreicht hat, wird die Beschleunigung beendet und der Schweißdraht 3 in einer ersten Endplateauphase 14 mit im Wesentlichen konstanter Rückwärtsendgeschwindigkeit v_{re_max} vom Werkstück 5 weg gefördert. Die Endplateauphase 14 besitzt die Zeitdauer T₃. Unmittelbar an das Ende der ersten Rückwärtsförderphase 13 schließt eine zweite Rückwärtsförderphase 15 an, in der die Rückwärtsgeschwindigkeit -v_{d} des Schweißdrahtes 3 durch Beschleunigung wieder reduziert wird. Die Rückwärtsgeschwindigkeit -v_{d} wird in dieser Phase bis Null reduziert. Anschließend ist eine erste Vorwärtsförderphase 16 vorgesehen, in welcher der Schweißdraht 3 auf eine Vorwärtsendgeschwindigkeit v_{v_max} beschleunigt wird. Die Gesamtdauer der ersten Vorwärtsförderphase 16 wird als zweite Zeitdauer T₂ bezeichnet. In einer zweiten Endplateauphase 17, deren Zeitdauer mit T₄ bezeichnet wird, wird die Vorwärtsendgeschwindigkeit v_{v_max} im Wesentlichen konstant gehalten. An die erste Vorwärtsförderphase 16 schließt eine zweite Vorwärtsförderphase 18 an, in welcher die Vorwärtsgeschwindigkeit +v_{d} wieder bis Null reduziert wird. Anschließend ist wieder eine erste Rückwärtsförderphase 13 vorgesehen. Bei dem gezeigten Geschwindigkeitsverlauf handelt es sich um eine schematische und idealisierte Darstellung eines Sollverlaufs. Tatsächliche Geschwindigkeitsverläufe können physikalisch bedingt von dem gezeigten Verlauf abweichen.

Am Ende der Kurzschlussphase 7 erfolgt zum Zeitpunkt des Aufbrechens 12 des Kurzschlusses eine Materialabgabe (Tropfenabgabe) vom Schweißdraht 3 auf das Werkstück 5, um eine Schweißnaht 19 (siehe Fig. 1) zu erzeugen. Ist jedoch die Geschwindigkeit des Schweißdrahtes 3 zum Zeitpunkt des Aufbrechens 12 des Kurzschlusses zu hoch, wie dies in Fig. 2 der Fall ist, so können Schweißspritzer entstehen, die die Qualität der Schweißnaht 19 negativ beeinflussen. Insbesondere ist dies bei zähflüssigen Werkstoffen wie Titan der Fall.

Im Stand der Technik wird der Geschwindigkeitsverlauf 10 über fest vorgegebene Zeitdauern T₁, T₂ bzw. T₃, T₄ festgelegt. Die erste Zeitdauer T₁ soll dabei derart eingestellt sein, dass der Schweißdraht 3 zum Zeitpunkt des Aufbrechens 12 ausreichend langsam gefördert wird, um Schweißspritzer zu vermeiden. Der Zeitpunkt des Aufbrechens 12 des Kurzschlusses wie auch der Zeitpunkt des Eintritts 11 des Kurzschlusses können jedoch variieren, wie dies in Fig. 2 gezeigt ist, und hängen von Parametern wie dem Werkstoff, der Schweißnaht, Verunreinigungen und der Temperatur etc. ab. Das Wählen der festgelegten Zeitdauern T₁ und T₂ bzw. T₃, T₄ ist daher nicht ganz einfach. Es kann beispielsweise der Fall eintreten, dass der Schweißdraht 3 zum Zeitpunkt des Aufbrechens 12 des Kurzschlusses mit einer zu hohen Rückwärtsfördergeschwindigkeit -v_{d} gefördert wird und somit Schweißspritzer entstehen. Dies ist in Fig. 2 gezeigt, wo der Kurzschluss zu den Zeitpunkten 20 mit zu hoher Geschwindigkeit aufbricht. Die Zeitpunkte 20 variieren dabei relativ zu dem Geschwindigkeitsverlauf 10 gesehen zeitlich, wie in Fig. 2 ebenfalls erkennbar ist. Auch die Zeitpunkte des Eintritts 11 des Kurzschlusses können variieren. Durch die Variation der Zeitpunkte des Eintritts 11 und Aufbrechens 12 des Kurzschlusses ist die Schweißfrequenz unregelmäßig und somit nicht stabil.

Erfindungsgemäß ist daher vorgesehen, dass die erste Zeitdauer T₁ der ersten Rückwärtsförderphase 13 mittels einer Steuerung und/oder Regelung derart angepasst wird, dass der Schweißdraht 3 in der zweiten Rückwärtsförderphase 15 zum Zeitpunkt des Aufbrechens 12 des Kurzschlusses eine vorgegebene reduzierte Rückwärtsgeschwindigkeit v_{re_K} nicht überschreitet, insbesondere dieser entspricht. Dies ist in Fig. 3 in der rechten Kurzschlussphase 7 dargestellt. Die erste Rückwärtsförderphase 13 wird daher im Vergleich zur Linken Kurzschlussphase 7 rechtzeitig beendet und die zweite Rückwärtsförderphase 15 eingeleitet, bevor das Aufbrechen 12 des Kurzschlusses stattfindet. Die Steuerung und/oder Regelung kann in der Steuer-/Regelungseinheit 8 implementiert sein.

Die zweite Rückwärtsförderphase 15 kann eine erste Zwischenplateauphase 21 mit einer im Wesentlichen konstanten Rückwärtsgeschwindigkeit -v_{d} aufweisen. Vorzugsweise wird der Schweißdraht 3 in der ersten Zwischenplateauphase 21 mit der vorgegebenen reduzierten Rückwärtsgeschwindigkeit v_{re_K} von dem Werkstück 5 weg gefördert. Die Steuerung und/oder Regelung passt die erste Zeitdauer T₁ in der gezeigten Ausführungsform derart an, dass das Aufbrechen 12 des Kurzschlusses in der ersten Zwischenplateauphase 21 stattfindet. Dies kann innerhalb eines Schweißzyklus oder von Schweißzyklus zu Schweißzyklus erfolgen. Nach dem Aufbrechen 12 des Kurzschlusses wird die vorgegebene reduzierte Rückwärtsgeschwindigkeit v_{re_K} des Schweißdrahtes 3 noch für eine Haltezeitdauer T_{hold_1} gehalten, bevor die Beschleunigung des Schweißdrahtes 3 fortgesetzt wird.

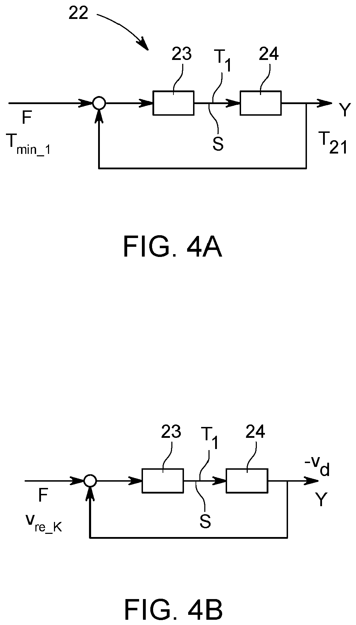

In Fig. 4A ist ein Blockschaltbild für eine Regelung gezeigt. Die Regelung wird durch einen geschlossenen Regelkreis 22 gebildet und ist dazu eingerichtet, die erste Zeitdauer T₁, im Falle einer Abweichung, von Schweißzyklus zu Schweißzyklus anzupassen, sodass der Schweißdraht 3 im darauffolgenden Schweißzyklus in der zweiten Rückwärtsförderphase 15 zum Zeitpunkt des Aufbrechens 12 des Kurzschlusses eine vorgegebene reduzierte Rückwärtsgeschwindigkeit v_{re_K} nicht überschreitet. In Fig. 3 ist eine Anpassung von Schweißzyklus zu Schweißzyklus gezeigt. Insbesondere kann die erste Zeitdauer T₁ dabei so angepasst werden, dass das Aufbrechen 12 des Kurzschlusses in der ersten Zwischenplateauphase 21 stattfindet. Der Regelkreis 22 beinhaltet einen Regler 23, der beispielsweise als P- oder PI-Regler ausgebildet sein kann, und die Regelstrecke 24. Als Stellgröße S ist in dem Regelkreis 22 die erste Zeitdauer T₁ vorgesehen. Diese kann durch den Regler 23 angepasst werden. Die Soll- oder Führungsgröße F des Regelkreises 22 wird durch eine erste Solldauer T_{min_1} der ersten Zwischenplateauphase 21 gebildet. Als gemessene Regelgröße Y wird die Dauer T₂₁ der ersten Zwischenplateauphase 21 herangezogen.

In Fig. 4B ist eine alternative Ausführungsform der Regelung gezeigt. Stellgröße S des Regelkreises 22 dient wiederum die erste Zeitdauer T₁. Diese kann durch den Regler 23 angepasst werden. Als Soll- oder Führungsgröße F des Regelkreises 22 wird jedoch die vorgegebene reduzierte Rückwärtsgeschwindigkeit v_{re_K} des Schweißdrahtes 3 verwendet, die dieser zum Zeitpunkt des Aufbrechens 12 des Kurzschlusses aufweisen soll. Als gemessene Regelgröße Y wird die gemessene Rückwärtsgeschwindigkeit -v_{d} des Schweißdrahtes 3 zum Zeitpunkt des Aufbrechens 12 des Kurzschlusses verwendet. Wenn die Geschwindigkeit des Schweißdrahtes 3 zum Zeitpunkt des Aufbrechens 12 des Kurzschlusses von der vorgegebenen reduzierten Rückwärtsgeschwindigkeit v_{re_K} abweicht, passt der Regler 23 die erste Zeitdauer T₁ im nächsten Schweißzyklus an, sodass der Schweißdraht 3 beim Aufbrechen 12 des Kurzschlusses künftig mit der vorgegebenen reduzierten Rückwärtsgeschwindigkeit v_{re_K} gefördert wird. Eine Anpassung von Schweißzyklus zu Schweißzyklus ist in Fig. 3 gezeigt. Insbesondere kann die erste Zeitdauer T₁ dabei so angepasst werden, dass das Aufbrechen 12 des Kurzschlusses in der ersten Zwischenplateauphase 21 stattfindet.

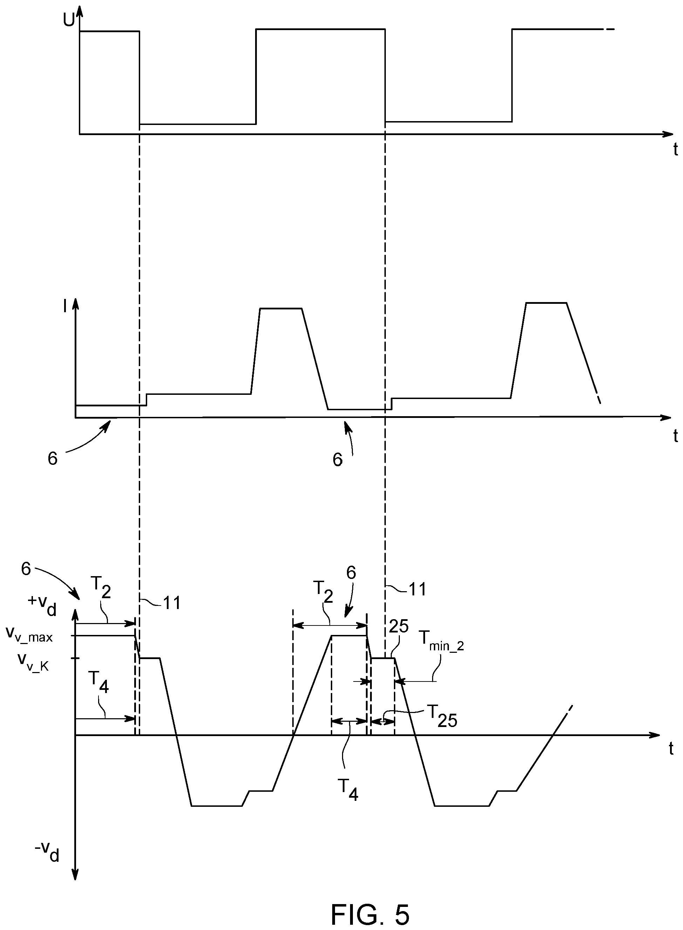

Analog zur Kurzschlussphase kann durch eine weitere Steuerung und/oder Regelung in einer weiteren Steuer-/Regelungseinheit 8' eine Anpassung der zweiten Zeitdauer T₂ der ersten Vorwärtsförderphase 16 erfolgen, sodass der Schweißdraht 3 in der zweiten Vorwärtsförderphase 18 zum Zeitpunkt des Eintritts 11 des Kurzschlusses eine vorgegebene reduzierte Vorwärtsgeschwindigkeit v_{v_K} nicht überschreitet. Dies ist in Fig. 5 in der rechten Lichtbogenphase 6 dargestellt. Die erste Vorwärtsförderphase 16 wird daher rechtzeitig beendet und die zweite Vorwärtsförderphase 18 eingeleitet, bevor der Eintritt 11 des Kurzschlusses stattfindet. Fig. 5 zeigt auch einen Schweißstromverlauf und einen Schweißspannungsverlauf.

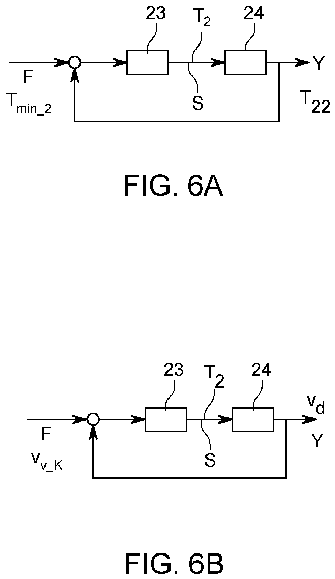

In Fig. 6A und Fig. 6A sind weitere Regelungen veranschaulicht.

In Fig. 6A ist ein Blockschaltbild für eine weitere Regelung gezeigt. Die weitere Regelung wird durch einen geschlossenen Regelkreis 22' gebildet und ist dazu eingerichtet, die zweite Zeitdauer T₂, falls notwendig, von Schweißzyklus zu Schweißzyklus anzupassen, sodass der Schweißdraht 3 im darauffolgenden Schweißzyklus in der zweiten Rückwärtsförderphase 18 zum Zeitpunkt des Eintritts 11 des Kurzschlusses eine vorgegebene reduzierte Vorwärtsgeschwindigkeit v_{v_K} nicht überschreitet. Dies ist in Fig. 5 gezeigt. Insbesondere kann die erste Zeitdauer T₂ dabei so angepasst werden, dass der Eintritt 11 des Kurzschlusses in einer zweiten Zwischenplateauphase 25 mit einer konstanter vorgegebener reduzierter Vorwärtsgeschwindigkeit v_{v_K} stattfindet. Der Regelkreis 22' beinhaltet einen Regler 23, der beispielsweise als P- oder PI-Regler ausgebildet sein kann, und die Regelstrecke 24'. Als Stellgröße S verwendet der weitere Regelkreis 22' die zweite Zeitdauer T₂. Diese kann durch den weiteren Regler 23' angepasst werden. Die Soll- oder Führungsgröße F des weiteren Regelkreises 22' wird durch eine zweite Solldauer Tₘᵢₙ_₂ der zweiten Zwischenplateauphase 25 gebildet. Als gemessene Regelgröße R wird die Dauer T₂₅ der zweiten Zwischenplateauphase 25 herangezogen.

In Fig. 6B ist ein alternativer weiterer Regelkreis 22' gezeigt. Stellgröße S des weiteren Regelkreises 22' dient wiederum die zweite Zeitdauer T₂. Diese kann durch den weiteren Regler 23' angepasst werden. Als Soll- oder Führungsgröße F des weiteren Regelkreises 22' wird jedoch die vorgegebene reduzierte Vorwärtsgeschwindigkeit v_{v_K} des Schweißdrahtes 3 verwendet, die dieser zum Zeitpunkt des Eintritts 11 des Kurzschlusses aufweisen soll. Als gemessene Regelgröße Y wird die gemessene Vorwärtsgeschwindigkeit v_{d} des Schweißdrahtes 3 zum Zeitpunkt des Eintritts 11 des Kurzschlusses verwendet. Wenn die Geschwindigkeit des Schweißdrahtes 3 zum Zeitpunkt des Eintritts 11 des Kurzschlusses von der vorgegebenen reduzierten Vorwärtsgeschwindigkeit v_{v_K} abweicht, passt der weitere Regler 23' die zweite Zeitdauer T₂ im nächsten Schweißzyklus an, sodass der Schweißdraht 3 beim Eintritt 11 des Kurzschlusses künftig mit der vorgegebenen reduzierten Vorwärtsgeschwindigkeit v_{v_K} gefördert wird. Eine Anpassung von Schweißzyklus zu Schweißzyklus ist in Fig. 5 gezeigt. Insbesondere kann die zweite Zeitdauer T₂ dabei so angepasst werden, dass der Eintritt 11 des Kurzschlusses in der zweiten Zwischenplateauphase 25 stattfindet.

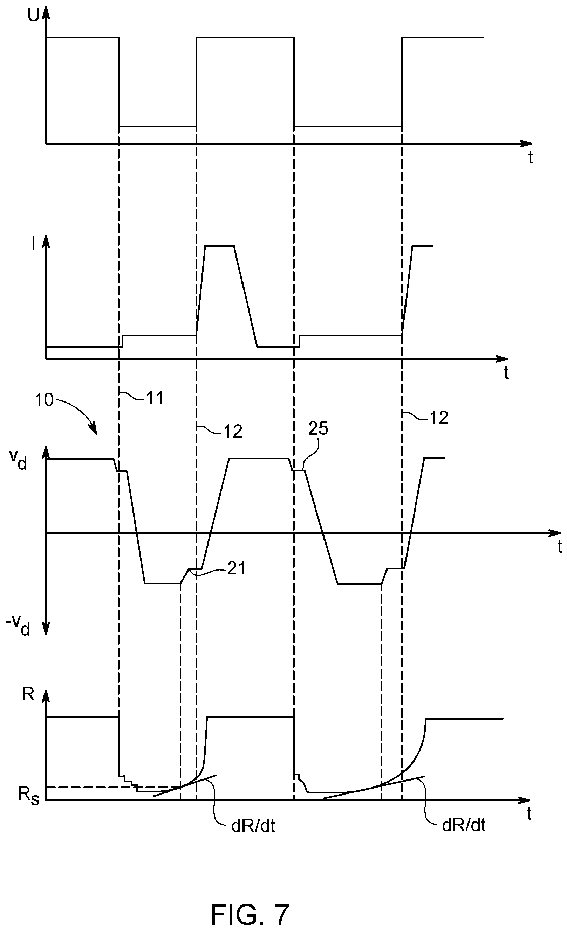

Fig. 7 zeigt, unterhalb eines Geschwindigkeitsverlaufs 10, eines Schweißspannungsverlaufs und eines Schweißstromverlaufs, einen zeitlichen Verlauf eines Widerstandswerts R, auf dessen Basis das Aufbrechen 12 des Kurzschlusses prognostiziert werden kann. Der Widerstandswert wird aus der Schweißspannung U und aus dem Schweißstrom I berechnet. Auf Basis der Prognose kann die erste Zeitdauer T₁ angepasst werden. Dies kann innerhalb eines Zyklus erfolgen. Die Anpassung der ersten Zeitdauer T₁ kann durch eine Steuerung erfolgen. Wenn beispielsweise der Widerstandswert einen Widerstandsschwellwert Rₛ übersteigt oder die Widerstandsänderungsrate dR/dt einen vorgegebenen Widerstandsänderungsratenschwellwert übersteigt, kann das bevorstehende Aufbrechen 12 des Kurzschlusses bestimmt werden. In weiterer Folge kann die Steuerung die erste Rückwärtsförderphase 13 beenden und die zweite Rückwärtsförderphase 15 einleiten. Auf diese Weise wird die erste Zeitdauer T₁ angepasst.

## Patentansprüche

1. Kurzschlussschweißverfahren mit aufeinanderfolgenden Schweißzyklen, die jeweils eine Lichtbogenphase (6) und eine Kurzschlussphase (7) aufweisen, mit den folgenden Schritten während eines Schweißzyklus:
Fördern eines abschmelzenden Schweißdrahtes (3) weg von einem Werkstück (5) während der Kurzschlussphase (7) mit einer Rückwärtsgeschwindigkeit (-v_{d}) , sodass Material von dem Schweißdraht (3) an das Werkstück (5) abgegeben und ein Lichtbogen gezündet wird, wobei der Schweißdraht (3) während der Kurzschlussphase (7) in einer ersten Rückwärtsförderphase (13) mit einer ersten Zeitdauer (T₁) auf eine Rückwärtsendgeschwindigkeit (v_{re_max}) gebracht und mit dieser bis zum Beginn einer zweiten Rückwärtsförderphase (15), in der die Rückwärtsgeschwindigkeit (-v_{d}) des Schweißdrahts (3) wieder reduziert wird, gefördert wird; und
Fördern des Schweißdrahtes (3) in Richtung des Werkstückes (5) während der Lichtbogenphase (6) mit einer Vorwärtsgeschwindigkeit (v_{d}), um den Schweißdraht (3) mit dem Werkstück (5) in Berührung zu bringen und einen Kurzschluss zwischen dem Schweißdraht (3) und dem Werkstück (5) zu erzeugen, wobei der Schweißdraht (3) während der Lichtbogenphase (6) in einer ersten Vorwärtsförderphase (16) mit einer zweiten Zeitdauer (T₂) auf eine Vorwärtsendgeschwindigkeit (v_{v_max}) gebracht und mit dieser bis zum Beginn einer zweiten Vorwärtsförderphase (18), in der die Vorwärtsgeschwindigkeit (v_{d}) des Schweißdrahts (3) wieder reduziert wird, gefördert wird,
**dadurch gekennzeichnet, dass**
die erste Zeitdauer (T₁) der ersten Rückwärtsförderphase (13) mittels einer Steuerung und/oder Regelung derart angepasst wird, dass der Schweißdraht (3) in der zweiten Rückwärtsförderphase (15) zum Zeitpunkt des Aufbrechens (12) des Kurzschlusses eine vorgegebene reduzierte Rückwärtsgeschwindigkeit (v_{re_K}) nicht überschreitet.

2. Kurzschlussschweißverfahren nach Anspruch 1, **dadurch gekennzeichnet, dass** die zweite Rückwärtsförderphase (15) eine erste Zwischenplateauphase (21) mit einer im Wesentlichen konstanten Rückwärtsgeschwindigkeit (-v_{d}) aufweist, wobei der Schweißdraht (3) in der ersten Zwischenplateauphase (21) vorzugsweise mit der vorgegebenen reduzierten Rückwärtsgeschwindigkeit (v_{re_K}) von dem Werkstück (5) weg gefördert wird.

3. Kurzschlussschweißverfahren nach Anspruch 2, **dadurch gekennzeichnet, dass** die erste Zeitdauer (T₁) derart durch die Steuerung und/oder Regelung angepasst wird, dass das Aufbrechen (12) des Kurzschlusses in der ersten Zwischenplateauphase (21) erfolgt.

4. Kurzschlussschweißverfahren nach Anspruch 3, **dadurch gekennzeichnet, dass** eine Regelung zum Anpassen der ersten Zeitdauer (T₁) vorgesehen ist und die Regelung durch einen Regelkreis (22) mit einem Regler (23), insbesondere einem P- oder PI-Regler, erfolgt, wobei die Regelung die erste Zeitdauer (T₁) anpasst, sodass die erste Zwischenplateauphase (21) einer ersten Solldauer (T_{min_1}) entspricht.

5. Kurzschlussschweißverfahren nach einem der Ansprüche 1 bis 3, **dadurch gekennzeichnet, dass** eine Regelung zum Anpassen der ersten Zeitdauer (T₁) vorgesehen ist und die Regelung durch einen Regelkreis (22) mit einem Regler (23), insbesondere einem P-oder PI-Regler, erfolgt, wobei eine Stellgröße (S) des Regelkreises (22) durch die erste Zeitdauer (T₁), eine Führungsgröße (F) des Regelkreises (22) durch eine Soll-Rückwärtsgeschwindigkeit des Schweißdrahtes (3), insbesondere die vorgegebene reduzierte Rückwärtsgeschwindigkeit (v_{re_K}), und eine gemessene Regelgröße (Y) des Regelkreises (22) durch eine gemessene Rückwärtsgeschwindigkeit (-v_{d}) des Schweißdrahtes (3) zum Zeitpunkt des Aufbrechens (12) des Kurzschlusses gebildet wird.

6. Kurzschlussschweißverfahren nach einem der Ansprüche 1 bis 3, **dadurch gekennzeichnet, dass** laufend ein Widerstandswert (R) aus einem Schweißstrom (I) und einer Schweißspannung (U) ermittelt wird und eine Prognose über den Zeitpunkt des Aufbrechens (12) des Kurzschlusses aus dem Widerstandswert (R) erstellt wird, wobei die erste Zeitdauer (T₁) auf Basis der Prognose angepasst wird, indem mit der zweiten Rückwärtsförderphase (15) begonnen wird.

7. Kurzschlussschweißverfahren nach Anspruch 6, **dadurch gekennzeichnet, dass** die Prognose auf Basis eines vorgegebenen Widerstandsschwellwertes (Rₛ) oder auf Basis einer Widerstandsänderungsrate (dR/dt) erstellt wird.

8. Kurzschlussschweißverfahren nach einem der Ansprüche 1 bis 7, **dadurch gekennzeichnet, dass** die erste Rückwärtsförderphase (13) eine erste Endplateauphase (14) aufweist, in der der Schweißdraht (3) mit im Wesentlichen konstanter Rückwärtsendgeschwindigkeit (v_{re_max}) gefördert wird und eine Zeitdauer (T₃) der ersten Endplateauphase (14) durch die Steuerung und/oder Regelung angepasst wird.

9. Kurzschlussschweißverfahren nach einem der Ansprüche 1 bis 8, **dadurch gekennzeichnet, dass** die zweite Zeitdauer (T₂) der ersten Vorwärtsförderphase (16) mittels einer weiteren Steuerung und/oder Regelung derart angepasst wird, dass der Schweißdraht (3) in der zweiten Vorwärtsförderphase (18) zum Zeitpunkt des Eintritts (11) des Kurzschlusses eine vorgegebene reduzierte Vorwärtsgeschwindigkeit (v_{v_K}) nicht überschreitet.

10. Kurzschlussschweißverfahren nach Anspruch 9, **dadurch gekennzeichnet, dass** die zweite Vorwärtsförderphase (18) eine zweite Zwischenplateauphase (25) mit einer im Wesentlichen konstanten Vorwärtsgeschwindigkeit (v_{d}) aufweist, wobei der Schweißdraht (3) in der zweiten Zwischenplateauphase (25) vorzugsweise mit der vorgegebenen reduzierten Vorwärtsgeschwindigkeit (v_{v_A}) in Richtung des Werkstücks (5) gefördert wird.

11. Kurzschlussschweißverfahren nach Anspruch 10, **dadurch gekennzeichnet, dass** die zweite Zeitdauer (T₂) derart durch die weitere Steuerung und/oder Regelung angepasst wird, dass der Eintritt (11) des Kurzschlusses in der zweiten Zwischenplateauphase (25) erfolgt.

12. Kurzschlussschweißverfahren nach Anspruch 11, **dadurch gekennzeichnet, dass** eine weitere Regelung zum Anpassen der zweiten Zeitdauer (T₂) vorgesehen ist und die weitere Regelung durch einen weiteren Regelkreis (22') mit einem weiteren Regler (23'), insbesondere einem P- oder PI-Regler, erfolgt, wobei die weitere Regelung die zweite Zeitdauer (T₂) anpasst, sodass die zweite Zwischenplateauphase (25) einer zweiten Solldauer (T_{min_2}) entspricht.

13. Kurzschlussschweißverfahren nach einem der Ansprüche 9 bis 11, **dadurch gekennzeichnet, dass** eine weitere Regelung zum Anpassen der zweiten Zeitdauer (T₂) vorgesehen ist und die weitere Regelung durch einen weiteren Regelkreis (22') mit einem Regler (23'), insbesondere einem P- oder PI-Regler, erfolgt, wobei eine Stellgröße (S) des weiteren Regelkreises (22') durch die zweite Zeitdauer (T₂), eine Führungsgröße (F) des Regelkreises (22') durch eine Soll-Vorwärtsgeschwindigkeit des Schweißdrahtes (3), insbesondere die vorgegebene reduzierte Vorwärtsgeschwindigkeit (v_{v_K}), und eine gemessene Regelgröße (Y) des weiteren Regelkreises (22') durch eine gemessene Vorwärtsgeschwindigkeit (v_{d}) des Schweißdrahtes (3) zum Zeitpunkt des Eintritts (11) des Kurzschlusses gebildet wird.

14. Schweißvorrichtung (1) zum Durchführen eines Kurzschlussschweißverfahrens nach einem der vorhergehenden Ansprüche 1 bis 13 mit aufeinanderfolgenden Schweißzyklen, die jeweils eine Lichtbogenphase (6) und eine Kurzschlussphase (7) aufweisen, mit einem Schweißbrenner (2), wobei die Schweißvorrichtung (1) dazu eingerichtet ist,
einen abschmelzenden Schweißdraht (3) weg von dem Werkstück (5) während der Kurzschlussphase (7) mit einer Rückwärtsgeschwindigkeit (-v_{d}) zu fördern, sodass Material von dem Schweißdraht (3) an das Werkstück (5) abgegeben und ein Lichtbogen gezündet wird, wobei die Schweißvorrichtung (1)) weiters dazu eingerichtet ist, den Schweißdraht (3) während der Kurzschlussphase (7) in einer ersten Rückwärtsförderphase (13) mit einer ersten Zeitdauer (T₁) auf eine Rückwärtsendgeschwindigkeit (v_{re_max}) zu bringen und mit dieser bis zum Beginn einer zweiten Rückwärtsförderphase (15), in der die Rückwärtsgeschwindigkeit (-v_{d}) des Schweißdrahts (3) wieder reduziert wird, zu fördern,
und die Schweißvorrichtung (1)weiters dazu eingerichtet ist, den Schweißdraht (3) in Richtung des Werkstückes (5) während der Lichtbogenphase (6) mit einer Vorwärtsgeschwindigkeit (v_{d}) zu fördern, um einen Kurzschluss zwischen dem Schweißdraht (3) und dem Werkstück (5) zu erzeugen, wobei die Schweißvorrichtung (1)weiters dazu eingerichtet ist, den Schweißdraht (3) während der Lichtbogenphase (6) in einer ersten Vorwärtsförderphase (16) mit einer zweiten Zeitdauer (T₂) auf eine Vorwärtsendgeschwindigkeit (v_{v_max}) zu bringen und mit der Vorwärtsendgeschwindigkeit (v_{v_max}) bis zum Beginn einer zweiten Vorwärtsförderphase (18), in der die Vorwärtsgeschwindigkeit (v_{d}) des Schweißdrahts (3) wieder reduziert wird, zu fördern,
**dadurch gekennzeichnet, dass**
eine Steuer-/Regelungseinheit (8) vorgesehen ist, die dazu eingerichtet ist, die erste Zeitdauer (T₁) der ersten Rückwärtsförderphase (13) mittels einer Steuerung und/oder Regelung derart anzupassen, dass der Schweißdraht (3) in der zweiten Rückwärtsförderphase (15) zum Zeitpunkt des Aufbrechens (12) des Kurzschlusses eine vorgegebene reduzierte Rückwärtsgeschwindigkeit (v_{re_K}) nicht überschreitet.

15. Kurzschlussschweißverfahren mit aufeinanderfolgenden Schweißzyklen, die jeweils eine Lichtbogenphase (6) und eine Kurzschlussphase (7) aufweisen, mit den folgenden Schritten während eines Schweißzyklus:
Fördern eines abschmelzenden Schweißdrahtes (3) weg von einem Werkstück (5) während der Kurzschlussphase (7) mit einer Rückwärtsgeschwindigkeit (-v_{d}) , sodass Material von dem Schweißdraht (3) an das Werkstück (5) abgegeben und ein Lichtbogen gezündet wird, wobei der Schweißdraht (3) während der Kurzschlussphase (7) in einer ersten Rückwärtsförderphase (13) mit einer ersten Zeitdauer (T₁) auf eine Rückwärtsendgeschwindigkeit (v_{re_max}) gebracht und mit dieser bis zum Beginn einer zweiten Rückwärtsförderphase (15), in der die Rückwärtsgeschwindigkeit (-v_{d}) des Schweißdrahts (3) wieder reduziert wird, gefördert wird,
Fördern des Schweißdrahtes (3) in Richtung des Werkstückes (5) während der Lichtbogenphase (6) mit einer Vorwärtsgeschwindigkeit (v_{d}), um den Schweißdraht (3) mit dem Werkstück (5) in Berührung zu bringen und einen Kurzschluss zwischen dem Schweißdraht (3) und dem Werkstück (5) zu erzeugen, wobei der Schweißdraht (3) während der Lichtbogenphase (6) in einer ersten Vorwärtsförderphase (16) mit einer zweiten Zeitdauer (T₂) auf eine Vorwärtsendgeschwindigkeit (v_{v_max}) gebracht und mit dieser bis zum Beginn einer zweiten Vorwärtsförderphase (18), in der die Vorwärtsgeschwindigkeit (v_{d}) des Schweißdrahts (3) wieder reduziert wird, gefördert wird,
**dadurch gekennzeichnet, dass**
die zweite Zeitdauer (T₂) der ersten Vorwärtsförderphase (16) mittels einer weiteren Steuerung und/oder Regelung derart angepasst wird, dass der Schweißdraht (3) in der zweiten Vorwärtsförderphase (18) zum Zeitpunkt des Eintritts (11) des Kurzschlusses eine vorgegebene reduzierte Vorwärtsgeschwindigkeit (v_{v_K}) nicht überschreitet.

16. Schweißvorrichtung (1) zum Durchführen eines Kurzschlussschweißverfahrens nach Anspruch 15 mit aufeinanderfolgenden Schweißzyklen, die jeweils eine Lichtbogenphase (6) und eine Kurzschlussphase (7) aufweisen, mit einem Schweißbrenner (2), wobei die Schweißvorrichtung (1) dazu eingerichtet ist,
einen abschmelzenden Schweißdraht (3) weg von dem Werkstück (5) während der Kurzschlussphase (7) mit einer Rückwärtsgeschwindigkeit (-v_{d}) zu fördern, sodass Material von dem Schweißdraht (3) an das Werkstück (5) abgegeben und ein Lichtbogen gezündet wird, wobei die Schweißvorrichtung (1) weiters dazu eingerichtet ist, den Schweißdraht (3) während der Kurzschlussphase (7) in einer ersten Rückwärtsförderphase (13) mit einer ersten Zeitdauer (T₁) auf eine Rückwärtsendgeschwindigkeit (vᵣₑ_ₘₐₓ) zu bringen und mit dieser bis zum Beginn einer zweiten Rückwärtsförderphase (15), in der die Rückwärtsgeschwindigkeit (-v_{d}) des Schweißdrahts (3) wieder reduziert wird, zu fördern,
und die Schweißvorrichtung (1)weiters dazu eingerichtet ist, den Schweißdraht (3) in Richtung des Werkstückes (5) während der Lichtbogenphase (6) mit einer Vorwärtsgeschwindigkeit (v_{d}) zu fördern, um einen Kurzschluss zwischen dem Schweißdraht (3) und dem Werkstück (5) zu erzeugen, wobei die Schweißvorrichtung (1)weiters dazu eingerichtet ist, den Schweißdraht (3) während der Lichtbogenphase (6) in einer ersten Vorwärtsförderphase (16) mit einer zweiten Zeitdauer (T₂) auf eine Vorwärtsendgeschwindigkeit (v_{v_max}) zu bringen und mit der Vorwärtsendgeschwindigkeit (v_{v_max}) bis zum Beginn einer zweiten Vorwärtsförderphase (18), in der die Vorwärtsgeschwindigkeit (v_{d}) des Schweißdrahts (3) wieder reduziert wird, zu fördern,
**dadurch gekennzeichnet, dass**
eine weitere Steuer-/Regelungseinheit (8') vorgesehen ist, die dazu eingerichtet ist, die zweite Zeitdauer (T₂) der ersten Vorwärtsförderphase (16) mittels einer weiteren Steuerung und/oder Regelung derart anzupassen, dass der Schweißdraht (3) in der zweiten Vorwärtsförderphase (18) zum Zeitpunkt des Eintritts (11) des Kurzschlusses eine vorgegebene reduzierte Vorwärtsgeschwindigkeit (v_{v_K}) nicht überschreitet.
